# FASCICULE DE BREVET EUROPEEN

(11) **EP 2 196 341 B1**
(45) Date de publication et mention de la délivrance du brevet: **01.08.2012**
(21) Numéro de dépôt: 09175182.6
(22) Date de dépôt: 05.11.2009
(51) Int. Cl.: B60J 1/16

(54) **Dispositif d'obturation d'une baie d'un véhicule automobile à panneau coulissant, et véhicule correspondant**
Vorrichtung zur Abdichtung eines Öffnungsfeldes eines Kraftfahrzeugs mit Hilfe eines Schiebepaneels, und entsprechendes Kraftfahrzeug
Device for locking a bay of an automobile with a sliding panel, and corresponding automobile

(30) Priorité: 06.11.2008 FR 0857554
(43) Date de publication de la demande: 16.06.2010
(73) Titulaire: Advanced Comfort Systems France SAS - ACS France, 79300 Bressuire (FR)
(72) Inventeur: Guillemoteau, Stéphane, 79300 Bressuire (FR)
(74) Mandataire: Bioret, Ludovic

(56) Documents cités:
- EP-A- 1 916 132
- EP-A- 1 920 957
- CA-A1- 2 239 610
- DE-A1- 4 416 827
- DE-C1- 4 038 900
- FR-A- 2 547 777

## Description

### 1. Domaine de l'invention

Le domaine de l'invention est celui des baies de véhicule automobile. Plus précisément, l'invention concerne les dispositifs d'obturation d'une baie ménagée dans la carrosserie d'un véhicule, et comprenant une partie fixe rapportée de façon affleurante sur la carrosserie, par collage, et une partie mobile coulissante, essentiellement vitrée, susceptible de libérer ou de fermer une ouverture ménagée dans la partie fixe.

### 2. Techniques de l'art antérieur

Classiquement, pour obturer la baie d'un véhicule, qu'il s'agisse d'une automobile, d'un véhicule utilitaire, d'un camion, d'un autobus ou d'un wagon de chemin de fer, on rapporte une glace, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

Une autre technique est décrite notamment dans les documents de brevet EP 0 778 168 et EP 0 857 844, au nom du titulaire de la présente demande de brevet. Le dispositif d'obturation présenté dans ces documents (appelé aussi par la suite « baie flush ») comprend une partie fixe comportant une portion vitrée, et une partie mobile essentiellement vitrée par rapport à la partie fixe. La partie mobile est reliée à la partie fixe par des éléments fonctionnels, ou rails, qui permettent la mobilité requise et qui sont rapportés sur la face de la partie fixe tournée vers l'intérieur du véhicule.

Une telle baie « flush » peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP 1 022 172
EP 1 920 957 décrit le préambule de la revendication 1.

Sur le plan esthétique, la baie « flush » présente, vu de l'extérieur, un aspect lisse, affleurant avec la carrosserie, du fait qu'aucun cadre n'est nécessaire.

Le mouvement de la partie mobile peut être, par exemple, basculant ou coulissant.

Pour assurer un coulissement du panneau mobile, constitué généralement par un panneau transparent, les moyens fonctionnels comprennent un dispositif de guidage comportant un premier et un second rails de guidage montés fixes sur le panneau fixe de la baie, de part et d'autre de l'ouverture fermée par le panneau mobile. Celui-ci est monté sur les rails, pour coulisser selon une direction longitudinale, dans un plan de coulissement entre une (ou plusieurs) position(s) d'ouverture et une position intermédiaire de dégagement dans laquelle il est en regard de la baie et dégagé de celle-ci.

Selon une technique particulière, des moyens, par exemple sous la forme d'articulations, assurent la liaison du panneau mobile avec les rails de guidage de façon à permettre un déplacement transversal du panneau mobile entre sa position intermédiaire de dégagement dans laquelle il est en regard et en retrait transversal de la baie, et sa position d'obturation dans laquelle il est enchâssé dans la baie.

De telles articulations permettent ainsi à la partie mobile de passer du plan formé par la partie fixe (position d'obturation) à un plan sensiblement parallèle de coulissement, et réciproquement.

Il est également possible de combiner les deux mouvements, sous la forme d'un mouvement louvoyant, selon lequel le bord distal (c'est-à-dire le bord éloigné des moyens de verrouillage, également appelé bord avant) de la partie mobile se trouve, en fin de course, dans le plan de la baie (la partie mobile étant alors « en travers », entre le plan d'obturation et le plan de coulissement). Il suffit alors de ramener, manuellement, le bord proximal (c'est-à-dire le bord proche des moyens de verrouillage, également appelé bord arrière) pour assurer l'obturation.

L'invention se rapporte plus particulièrement à ce type de dispositif d'obturation, à ses variantes et ses perfectionnements.

Plusieurs solutions ont été proposées, notamment par le Demandeur, pour le verrouillage de la partie mobile dans la position fermée, et le cas échéant, dans des positions d'ouverture choisies. Elles sont souvent peu ergonomiques et/ou peu pratiques et nécessitent notamment de procéder à un effort, par exemple de serrage ou de rotation pour obtenir le verrouillage et/ou le déverrouillage. Notamment, elles présentent généralement de présenter des surfaces de préhension de taille réduite, imposée par la normalisation qui impose une taille limite (par exemple inférieure ou égale à 23 mm) pour les éléments faisant saillie vers l'intérieur du véhicule. Ces dimensions rendent difficiles l'action de déverrouillage et/ou le guidage en coulissement.

Un autre inconvénient des techniques connues est que, pour permettre d'effectuer avec une même poignée (ou avec un même ensemble de poignées, dans le cas où deux éléments de poignée sont proposés) les opérations de déverrouillage et de déplacement, il est généralement nécessaire de prévoir des moyens complexes pour l'actionnement, la transmission de l'action vers les pênes, le rappel dans une position de repos,... De plus, le montage, qui suppose de nombreuses pièces, est complexe et peut nécessiter des réglages particuliers.

### 3. Objectifs de l'invention

L'invention a donc notamment pour objectif de pallier les inconvénients de l'art antérieur cités ci-dessus.

Plus précisément, l'invention a pour objectif de proposer un dispositif d'obturation d'une baie intégrant une partie mobile, simplifiant les opérations d'ouverture et de fermeture de cette partie mobile, et le verrouillage de celle-ci en position d'obturation.

Selon un aspect particulier de l'invention, un objectif est également de fournir un tel dispositif, plus efficace et plus simple que ceux de l'art antérieur.

L'invention a également pour objectif de fournir un dispositif d'obturation d'une baie qui permette un verrouillage fiable et sans effort.

L'invention a encore pour objectif de fournir un dispositif d'obturation d'une baie qui soit simple à réaliser, à monter sur la carrosserie, y inclus sur une portière, d'un véhicule.

Un autre objectif de l'invention est de fournir un dispositif d'obturation d'une baie qui conserve l'ensemble des avantages des "baies flush" déjà développées par le titulaire de la présente demande, et notamment :
- Aspect esthétique affleurant ;
- Aspects aérodynamiques ;
- Facilité et coût réduit de fabrication ;
- Facilité et coût réduit de montage.

Un objectif particulier de l'invention est de fournir un tel dispositif qui soit particulièrement facile et simple à fabriquer et à monter, et dont le coût de fabrication et le coût de montage soient par conséquent réduits.

Un autre objectif particulier de l'invention est de fournir un tel dispositif d'obturation qui permette une augmentation du clair de baie, c'est-à-dire de la surface transparente du véhicule.

### 4. Principes généraux de l'invention

Tout ou partie de ces objectifs, ainsi que d'autres qui apparaîtront par la suite, sont atteints à l'aide d'un dispositif d'obturation d'une baie formée dans un élément de carrosserie d'un véhicule automobile, comprenant :
- une partie fixe, notamment vitrée, apte à être solidarisée à la baie, présentant une ouverture et supportant, sur une face orientée vers l'intérieur du véhicule, au moins un rail ;
- une partie mobile en coulissement le long du rail entre au moins une position d'obturation et une position de dégagement de ladite ouverture, la partie mobile comportant :
   * une portion vitrée,
   * un dispositif de verrouillage / déverrouillage d'au moins un pêne destiné à coopérer avec au moins une gâche associée au rail, le dispositif de verrouillage/déverrouillage comprenant au moins une poignée d'actionnement apte à agir sur ledit au moins un pêne,
   * au moins une portion de cadre entourant au moins partiellement la portion vitrée sur la face de la partie mobile orientée vers l'intérieur du véhicule, la portion de cadre présentant une surface principale sensiblement parallèle au plan défini par la portion vitrée et deux bords latéraux dont l'un au moins relie la portion de cadre à la portion vitrée, la portion de cadre étant agencée pour supporter le dispositif de verrouillage/ déverrouillage.

Le dispositif d'obturation peut se **caractériser en ce que** la poignée d'actionnement s'étend au moins à partir de l'un desdits bords latéraux de la portion de cadre.

Cette poignée d'actionnement qui s'étend au moins à partir de l'un desdits bords latéraux de la portion de cadre facilite le déplacement du panneau mobile en coulissement le long du rail.

De plus, un tel positionnement de la poignée d'actionnement sur un bord latéral du panneau mobile est particulièrement ergonomique. En effet, il permet d'augmenter la taille de la poignée facilitant la manipulation de celle-ci. A l'inverse, dans l'état de la technique, les poignées d'actionnement s'étendant à partir de la surface principale ont une dimension vers l'intérieur du véhicule limitée par les normes de sécurité, de telle sorte qu'elles peuvent être peu maniables.

Un autre avantage de l'invention consiste en le fait que la largeur de la portion de cadre peut être réduite grâce au nouveau positionnement de la poignée d'actionnement. Ainsi, le clair de baie peut être agrandi.

Par ailleurs, les dimensions de la poignée peuvent être adaptées à un usage ergonomique, sans problème par rapport aux normes relatives aux éléments faisant saillie vers l'intérieur du véhicule.

La poignée d'actionnement peut s'étendre essentiellement, voire exclusivement, à partir du bord latéral de la portion de cadre.

La poignée d'actionnement peut s'étendre sensiblement parallèlement au plan défini par la portion vitrée.

Selon un mode de réalisation particulier, la poignée d'actionnement peut traverser une lumière formée dans ledit bord latéral de la portion de cadre.

La poignée d'actionnement peut être mobile selon un axe s'étendant sensiblement parallèlement à l'axe de déplacement du ou desdits pênes.

La poignée d'actionnement peut comporter au moins un crochet relié à un pêne.

En particulier, la poignée d'actionnement peut comporter deux crochets orientés de façon opposée et reliés chacun à un pêne. Dans ce cas, la poignée d'actionnement peut être configurée de telle sorte que le rapprochement des crochets provoque le passage des pênes d'une position verrouillée vers une position déverrouillée.

Le dispositif de verrouillage / déverrouillage selon l'invention peut comporter, par exemple, des moyens de liaison du ou des pênes à la poignée d'actionnement, appartenant par exemple au groupe comprenant les câbles et les tringles. Cette approche permet de lier efficacement et simplement les pênes à la poignée d'actionnement et donc de contrôler aisément leur passage de la position verrouillée à la position déverrouillée.

Cette approche permet d'assurer un bon verrouillage du panneau coulissant tant en partie haute qu'en partie basse. Il permet également de faciliter la manipulation du panneau mobile.

Le dispositif de verrouillage/ déverrouillage peut comporter des moyens de rappel configurés pour agir sur la poignée d'actionnement et/ou les moyens de liaison et/ou le ou les pênes, de manière à les remettre dans une position de verrouillage. Lorsqu'ils agissent sur la poignée d'actionnement, les moyens de rappel peuvent permettre de remettre celle-ci dans une position de verrouillage. Par exemple, dans le cas où la poignée d'actionnement comporte deux crochets mobiles selon un axe sensiblement parallèle à l'axe de déplacement du ou desdits pênes, les crochets retrouvent automatiquement leur position axiale initiale dès lors qu'ils sont relâchés, grâce aux moyens de rappel.

Lorsqu'ils agissent sur le ou les pênes, les moyens de rappel permettent de rappeler les pênes dans une position verrouillée lorsque la poignée d'actionnement est relâchée, notamment lorsque les crochets sont éloignés par relâchement après leur rapprochement. Ainsi, les pênes passent automatiquement en position verrouillée dès lors qu'aucun utilisateur n'agit sur la poignée d'actionnement. Cet aspect permet ainsi notamment de renforcer la sécurité des occupants d'un véhicule en immobilisant automatiquement le panneau coulissant.

Le dispositif d'obturation peut par exemple comprendre deux pênes répartis de part et d'autre de la poignée d'actionnement et deux moyens de liaison associés respectivement à l'un et l'autre des pênes, de façon que la poignée d'actionnement agisse simultanément et symétriquement sur les pênes.

Au moins un pêne peut présenter une portion de section hexagonale.

Le dispositif peut présenter au moins une butée intégrée à la poignée d'actionnement, la butée étant agencée pour limiter la course de la poignée lorsque les moyens de rappel agissent sur le pêne.

L'invention a encore pour objet un véhicule automobile comprenant au moins un dispositif d'obturation d'une baie d'un véhicule automobile tel que défini plus haut.

### 5. Liste des figures

D'autres caractéristiques et avantages de l'invention apparaîtront plus clairement à la lecture de la description suivante d'un mode de réalisation préférentiel, donné à titre d'exemple illustratif non limitatif, et des dessins annexés, parmi lesquels :
- la figure 1 est une vue de face schématique et partielle d'un dispositif d'obturation conforme à l'invention,
- la figure 2 est une vue de face schématique et partielle d'un exemple de dispositif d'obturation selon l'invention,
- la figure 3 est une vue éclatée schématique et partielle, en perspective, d'éléments du dispositif d'obturation de la figure 2,
- la figure 4 est une vue schématique en perspective des éléments de la figure 3, une fois assemblés,
- la figure 5 illustre en perspective de manière schématique et partielle le dispositif d'obturation de la figure 3,
- la figure 6 illustre de manière schématique et partielle, en perspective, un autre exemple de dispositif d'obturation selon l'invention,
- la figure 7 est une vue schématique et partielle illustrant un pêne du dispositif d'obturation selon l'invention,
- la figure 8 est une vue schématique et partielle en perspective illustrant la possibilité de disposer une butée,
- la figure 9 est une vue de dessus schématique et partielle d'une poignée d'actionnement conforme à l'invention, et
- les figures 10 à 14 illustrent de manière schématique, en perspective, d'autres exemples de poignées d'actionnement.

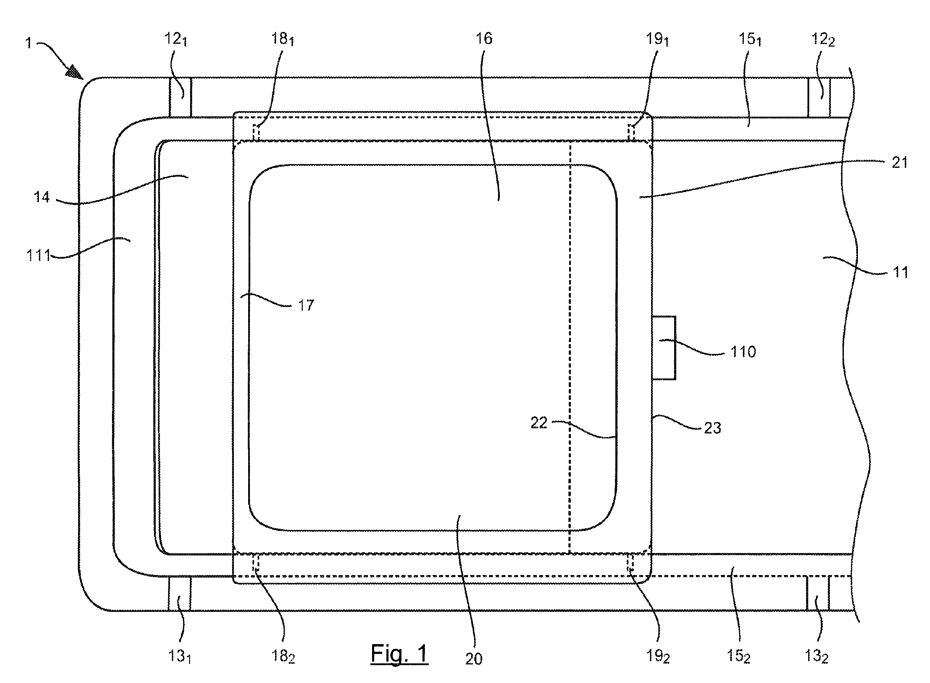

Un exemple de dispositif d'obturation 1 d'une baie formée dans un élément de carrosserie d'un véhicule automobile (ou « baie flush ») conforme à l'invention est illustré schématiquement sur la figure 1.

Une telle « baie flush » comprend tout d'abord une partie fixe 11, par exemple totalement ou essentiellement vitrée. Comme cela apparaît sur la figure 1, qui présente le côté destiné à être orienté vers l'intérieur du véhicule, la périphérie du panneau fixe 11 est libre (à l'exception des éléments 12₁ 12₂ 13₁ et 13₂ dont les fonctions sont rappelées ci-après).

Ainsi, le dispositif d'obturation de la figure 1 peut être rapporté directement sur les bords d'une baie définie dans la carrosserie d'un véhicule depuis l'extérieur de celui-ci. Ces bords de la baie sont réalisés avec un léger retrait, correspondant sensiblement à l'épaisseur de la partie fixe 11, pour que celle-ci affleure avec le reste de la carrosserie, lorsqu'elle est montée.

Notamment, la baie peut être formée dans une paroi latérale du véhicule (par exemple pour les véhicules utilitaires, les monospaces, les breaks,...), dans une paroi orientée vers l'arrière du véhicule (par exemple pour les « pick-up »), dans un pavillon (le dispositif d'obturation pouvant alors former un pavillon ou une portion de pavillon vitré), ou encore dans une portière (dans ce cas, les bords de la baie peuvent être en partie formés par des éléments de réception s'étendant depuis le caisson de la portière, le dispositif étant alors rapporté sur le bord supérieur du caisson et sur les éléments de réception qui s'étendent de celui-ci).

Un joint, ou cordon, de colle (non représenté) est placé sur le pourtour de la partie fixe, ou sur les bords de la baie de la carrosserie, et la périphérie de la partie fixe 11 est ainsi directement solidarisée par collage, aux bords de la baie, sans qu'il soit nécessaire de prévoir un cadre ou tout autre élément de liaison intermédiaire. Le cordon de colle assure également, avantageusement une fonction d'étanchéité.

Une ouverture 14 est réalisée dans la partie fixe 11. Comme on le voit sur la figure 1, les bords de cette ouverture 14 sont éloignés de la périphérie de la partie fixe 11, pour permettre la solidarisation de celle-ci aux bords de la baie, comme expliqué ci-dessus.

La partie fixe 11 peut être réalisée sous la forme d'un seul élément vitré, en verre ou en plastique adapté à l'application à l'automobile, dans lequel est réalisée l'ouverture 14. Par vitré, on entend ici tout matériau apte à laisser passer au moins partiellement la lumière (matériau transparent, translucide, teinté,...).

La partie fixe 11 peut également être réalisée en plusieurs éléments constitutifs, ces éléments pouvant alors définir chacun un ou plusieurs côtés de l'ouverture 14. Une telle approche permet notamment de simplifier la réalisation de l'ouverture 14 dans un panneau de verre. Bien sûr, dans ce cas, les différents éléments constitutifs de la partie fixe se trouvent dans un même plan (qui peut, dans certains cas, être courbe, ou incurvé, dans au moins une dimension, par exemple pour suivre un galbe de la carrosserie). En effet, vue de l'extérieur, la partie fixe doit présenter un aspect lisse, ou affleurant.

La solidarisation de ces différents éléments constitutifs peut se faire par tout moyen adapté, par exemple par collage. Les rails 15₁ et 15₂ peuvent participer à cette solidarisation. Il est possible, sans sortir du cadre de l'invention, que l'un des éléments de la partie fixe ne soit pas vitré.

Selon une variante, la partie fixe 11 peut comprendre un élément de support, par exemple en matière plastique, définissant notamment la périphérie de la partie fixe, et percée de deux ouvertures, l'une étant fermée de façon définitive par un élément vitré monté fixe, et la seconde correspondant à l'ouverture 14. L'élément de support et l'élément vitré fixe se trouvent dans le même plan, de façon à définir une surface lisse, vue de l'extérieur.

Le dispositif d'obturation comprend encore une partie mobile 16, pouvant venir obturer ou dégager l'ouverture 14. Cette partie mobile 16 comporte une portion vitrée 20, une portion de cadre, notamment un cadre 17 dans l'exemple illustré et un dispositif de verrouillage / déverrouillage. La partie mobile 16 est maintenue et guidée par les deux rails 15₁, 15₂, qui sont montés sur la face de la partie fixe orientée vers l'intérieur de véhicule et éloignés de la périphérie de cette partie fixe, pour les raisons déjà expliquées plus haut.

La partie mobile 16 peut être déplacée (ou se déplacer, si des moyens de motorisation sont prévus) le long des rails 15₁, 15₂, dans un plan de coulissement sensiblement parallèle au plan défini par la partie fixe 11. Ainsi, la partie mobile 16 peut prendre une ou plusieurs positions d'ouverture, selon sa position par rapport aux rails 15₁, 15₂.

Par ailleurs, la partie mobile 16 peut se déplacer perpendiculairement au plan défini par la partie fixe 11, de façon à venir obturer l'ouverture 14, dans une position fermée, dans laquelle elle affleure avec cette partie fixe 11, de façon à proposer un ensemble affleurant (carrosserie, partie fixe et partie mobile).

La face du panneau fixe tournée vers l'intérieur du véhicule porte par ailleurs un joint d'étanchéité (non représenté sur la figure 1) collé sur le contour de l'ouverture 14, dont l'extrémité de la lèvre vient prendre appui sur le panneau mobile 16, lorsque celui-ci est en position d'obturation. Dans une variante, le joint d'étanchéité peut être monté sur le cadre 17, pour venir en contact avec la partie fixe 11.

Le mouvement de la partie mobile 16 par rapport à la partie fixe 11 peut, selon une première approche, se décomposer en deux déplacements indépendants :
- un déplacement perpendiculaire par rapport au plan formé par la partie fixe, permettant le passage d'une position fermée et verrouillée, dans laquelle la partie mobile se trouve dans le même plan que la partie fixe et l'ouverture, à une position de libération, dans laquelle la partie mobile est décalée par rapport à la partie fixe dans un plan de coulissement, de façon à permettre ce coulissement ;
- un déplacement dans le plan de coulissement, parallèle au plan formé par la partie fixe.

D'autres mouvements sont bien sûr possibles. Ainsi, selon une deuxième approche, la partie mobile peut louvoyer, c'est-à-dire suivre une courbe selon laquelle les deux mouvements (verrouillage / déverrouillage et coulissement) sont liés au moment de l'ouverture et de la fermeture.

Les rails 15₁ et 15₂ peuvent être solidarisés à la partie fixe 11 par collage ou par tout autre moyen adapté. Ils peuvent également être directement formés, par exemple par moulage ou surmoulage, sur la partie fixe 11. Ils sont généralement dissimulés, de même que les autres éléments fonctionnels, par de la sérigraphie, empêchant qu'on les voit depuis l'extérieur du véhicule.

Dans certains cas, les rails peuvent être non parallèles.

Par ailleurs, il est important, pour des raisons de sécurité (et en conséquence d'homologation au regard d'aspects réglementaires et/ou législatifs relatifs à la sécurité des véhicules) que les rails 15₁, 15₂ soient solidarisés à la carrosserie, et plus précisément aux bords de la baie. En effet, selon le règlement européen EC43 par exemple, il est imposé que, en cas de bris de verre (en l'occurrence de la partie fixe 11), les éléments susceptibles d'être projetés présentent une taille et/ou un poids inférieur à une limite prédéterminée, fortement dépassée par les rails ou la partie mobile. On comprend cependant, que si rien n'est prévu, en cas de bris de la partie fixe 11, ni les rails 15₁, 15₂ ni le panneau mobile 16 ne seront maintenus. Ils seront donc projetés, et risquent donc de blesser un passager du véhicule ou un passant.

Comme cela a été proposé dans le document de brevet EP 0 778 168, le titulaire de la présente demande a donc proposé d'équiper les rails 15₁, 15₂ de prolongement 12₁, 12₂, 13₁, 13₂, qui s'étendent sur la face tournée vers l'intérieur du véhicule de la partie fixe 11, de façon à être pris en sandwich entre le bord de la partie fixe 11 et le bord correspondant de la baie de la carrosserie.

Ainsi, le cordon de colle solidarisant la partie fixe 11 à la carrosserie solidarise également ces prolongements 12₁, 12₂, 13₁, 13₂ au bord de la carrosserie du véhicule. En conséquence, même lorsque la partie fixe 11 est brisée, et donc absente, les rails 15₁ et 15₂ sont maintenus en place par rapport à la carrosserie à l'aide de ces prolongements. Les rails 15₁ et 15₂ maintiennent quant à eux la partie mobile 16.

Ces prolongements peuvent être formés par moulage directement dans le rail, ou être rapportés sur celui-ci par tout moyen adéquat, par exemple par collage ou clippage.

Le rail inférieur 15₂ porte des prolongements 13₁, 13₂ présentant par ailleurs une ouverture suffisante pour permettre l'évacuation de l'eau recueillie dans le rail 15₂, correspondant par exemple à la condensation dans le véhicule. Cette eau est ainsi simplement et efficacement évacuée à l'extérieur du véhicule, sans que cela ne nuise à l'étanchéité. Les fonctions de maintien en cas de bris et d'évacuation de l'eau, peuvent bien sûr être assurées par des éléments distincts.

Selon le mode de réalisation illustré, les deux rails 15₁ et 15₂ sont formés dans une même pièce comprenant un élément de liaison 111, s'étendant entre les deux rails, le long d'un bord de la partie mobile 16. Cette pièce est collée à la partie fixe 11.

Le cadre 17 s'étend sur la face de la partie mobile 16 orientée vers l'intérieur du véhicule. Ce cadre ne s'étend pas sur l'autre face, de façon à préserver l'aspect affleurant. Dans l'exemple illustré, le cadre 17 entoure la portion vitrée 20 sur la face de la partie mobile orientée vers l'intérieur du véhicule. Le cadre 17 présente une surface principale 21 sensiblement parallèle au plan défini par la portion vitrée 20 et deux bords latéraux 22 et 23 dont l'un au moins, en l'occurrence le bord latéral 22, relie le cadre 17 à la portion vitrée. Les bords latéraux 22 et 23 sont, dans l'exemple illustré, sensiblement perpendiculaires au plan défini par la portion vitrée 20.

Dans l'exemple illustré, le cadre 17 porte au moins un pion de guidage supérieur 18₁ et un pion de guidage inférieur 18₂ prévus pour être guidés dans une coulisse correspondante formée respectivement dans les rails 15₁ et 15₂.

D'autres pions peuvent être également prévus pour le guidage souhaité. Dans le mode de réalisation illustré, le guidage est complété par des pions complémentaires 19₁, 19₂ qui assurent simultanément une fonction de pêne, coopérant avec des gâches prévues à cet effet dans les rails 15₁ et 15₂ de façon à verrouiller la partie mobile 16 dans sa position fermée (le cas échéant dans une ou plusieurs positions d'ouverture prédéterminées). Une poignée d'actionnement 110 apte à agir sur le ou les pêne(s) est montée sur le cadre 17, pour actionner le déverrouillage des pênes et faire coulisser la partie mobile 16.

Les pênes 19₁, 19₂ et la poignée d'actionnement 110 sont compris dans un dispositif de verrouillage / déverrouillage d'au moins un pêne destiné à coopérer avec au moins une gâche associée au rail. Le dispositif de verrouillage / déverrouillage de la partie mobile 16 comprend la poignée d'actionnement 110.

Conformément à l'invention, la poignée d'actionnement 110 s'étend à partir de l'un des bords latéraux 22 et 23 du cadre 17, et non pas de sa surface principale 21. Ainsi, la poignée ne s'étend pas vers l'intérieur du véhicule, et la contrainte de longueur limitée dans cette dimension est respectée.

Dans l'exemple illustré, la poignée d'actionnement 110 s'étend à partir du bord latéral 23 du cadre 17. Le bord latéral 23 forme le pourtour extérieur du cadre 17.

On ne sort pas du cadre de l'invention si le cadre 17 constitue seulement une portion de cadre (s'étendant par exemple uniquement sur la portion recouvrant les moyens reliant la poignée au(x) pêne(s)) et non un cadre entourant complètement la portion vitrée mobile 20.

De nombreuses formes de poignées d'actionnement sont imaginables, dès lors qu'elles remplissent leur fonction de déverrouillage du ou des pênes lorsqu'elles sont actionnées en s'étendant depuis un bord latéral.

La poignée d'actionnement peut être formée d'un élément de préhension unique, mobile en translation et/ou en rotation sensiblement dans le plan défini par le panneau mobile 20. Elle peut être au moins en partie déformable.

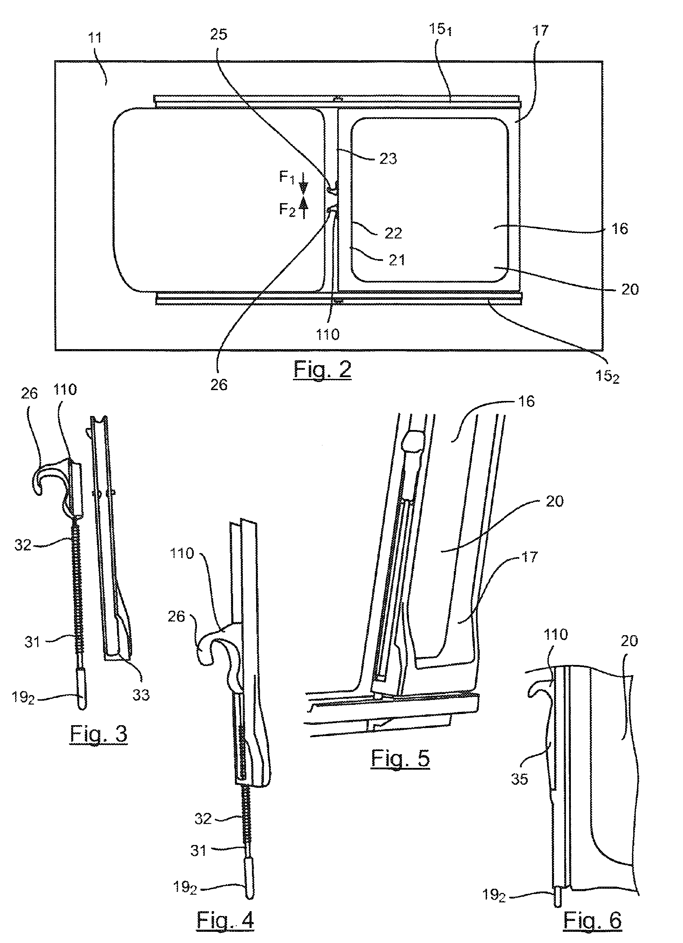

Un exemple de poignée d'actionnement 110 a été illustré sur les figures 2 à 9.

Dans cet exemple, la poignée d'actionnement 110 comporte deux crochets 25 et 26, orientés de façon opposée. Le crochet 25 est tourné vers le haut tandis que le crochet 26 est tourné vers le bas. Les crochets 25 et 26 formant la poignée d'actionnement 110 sont mobiles selon un axe s'étendant sensiblement parallèlement à l'axe de déplacement des pênes.

Le dispositif de verrouillage / déverrouillage comprend, outre la poignée d'actionnement 110 et les pênes 19₁, 19₂ , des moyens de liaison 31 de chacun des pênes à la poignée d'actionnement 110 comprenant dans l'exemple illustré une tringle. L'un de ces moyens de liaison 31 est visible sur les figures 3 et 4 qui montrent de manière isolée une portion du cadre 17.

Le dispositif de verrouillage / déverrouillage illustré comporte également des moyens de rappel 32 constitués dans l'exemple illustré par un ressort hélicoïdal entourant les moyens de liaison 31. Cette portion de cadre 17 comporte un logement 33 agencé pour loger au moins partiellement le dispositif de verrouillage / déverrouillage et en particulier les moyens de liaison 31 et les moyens de rappel 32, comme illustré sur la figure 4. Un cache peut être prévu et rapporté sur le cadre 17 pour dissimuler les moyens de liaison 31 et les moyens de rappel 32.

Lorsque l'on rapproche l'un de l'autre les crochets 25 et 26 de la poignée d'actionnement 110 (flèches F1 et F2), les pênes 19₁, 19₂ passent d'une position verrouillée où ils coopèrent avec une gâche de chacun des rails, à une position déverrouillée qui permet le déplacement par coulissement dans les rails de la partie mobile 16.

Lorsque les crochets 25 et 26 de la poignée d'actionnement 110 sont relâchés, ils reprennent automatiquement leur position initiale grâce au moyens de rappel 32, de telle sorte que chacun des pênes reprend automatiquement sa position verrouillée.

Comme expliqué plus haut, un cache destiné à dissimuler certains éléments du dispositif de verrouillage / déverrouillage peut être rapporté. En variante, la poignée d'actionnement 110 peut intégrer un tel cache, comme illustré sur la figure 6 dont la poignée d'actionnement 110 comporte un cache 35 s'étendant le long du bord latéral 23 du cadre 17.

Il est à noter que dans ce mode de réalisation, la poignée d'actionnement 110 s'étend essentiellement, voire exclusivement dans ce mode de réalisation, à partir du bord latéral 23 de la portion de cadre 17. La poignée d'actionnement 110 s'étend, dans cet exemple illustré, sensiblement parallèlement au plan défini par la partie mobile 16.

En particulier lorsque le bord latéral 23 comporte un cache permettant de dissimuler notamment les moyens de liaison 31 et les moyens de rappel 32, la poignée d'actionnement peut traverser une lumière formée dans le bord latéral 23 du cadre ou de la portion de cadre 17.

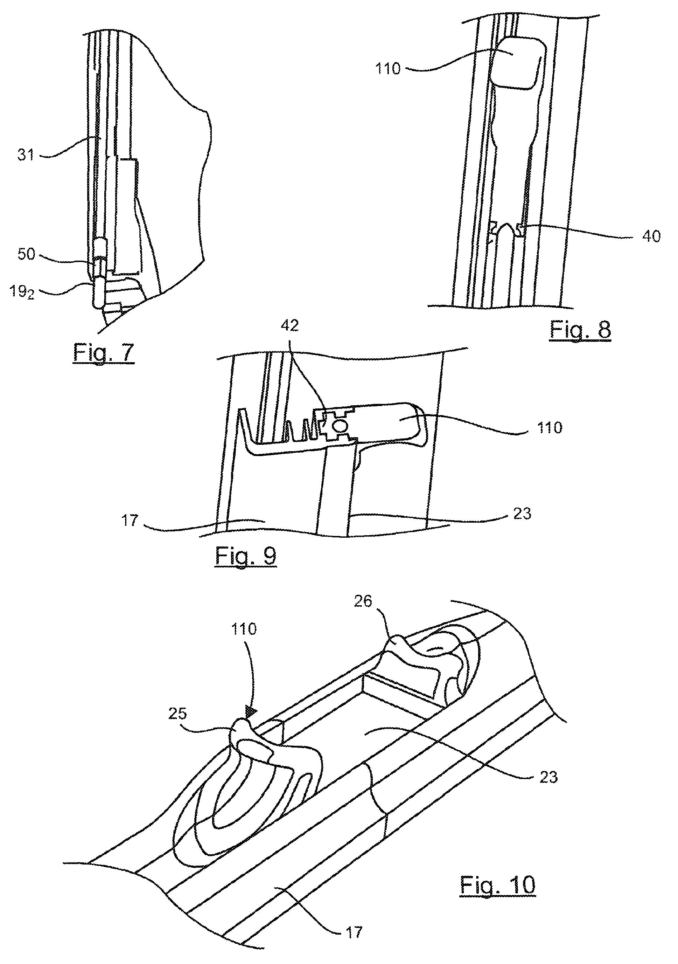

Comme illustré sur la figure 7, une portion 50 du pêne 19₁ et/ou 19₂ peut présenter une section de forme hexagonale. Cette portion 50 peut ainsi coopérer avec une clé de forme correspondante ce qui permet de régler facilement la hauteur du pêne par vissage.

Les moyens de verrouillage ou de déverrouillage peuvent comprendre, comme illustré sur la figure 8, au moins une butée 40 intégrée par exemple à la poignée d'actionnement. Cette butée 40 est agencée pour limiter la course de la poignée lorsque les moyens de rappel agissent sur le pêne.

Comme illustré sur la figure 9, le cadre 17 peut inclure une rainure 42 formée dans le bord latéral 23. La poignée d'actionnement 110 est maintenue dans la rainure 42 tout en étant apte à coulisser à l'intérieur de celle-ci.

D'autres exemples de poignées d'actionnement 110 ont été illustrées sur les figures 10 à 14.

Sur la figure 10, on a représenté une poignée d'actionnement 110 comprenant deux crochets 25 et 26 mobiles en coulissement dans une lumière du bord latéral 23 du cadre 17, présentant une forme légèrement différente de celle des crochets des figures 2 à 9.

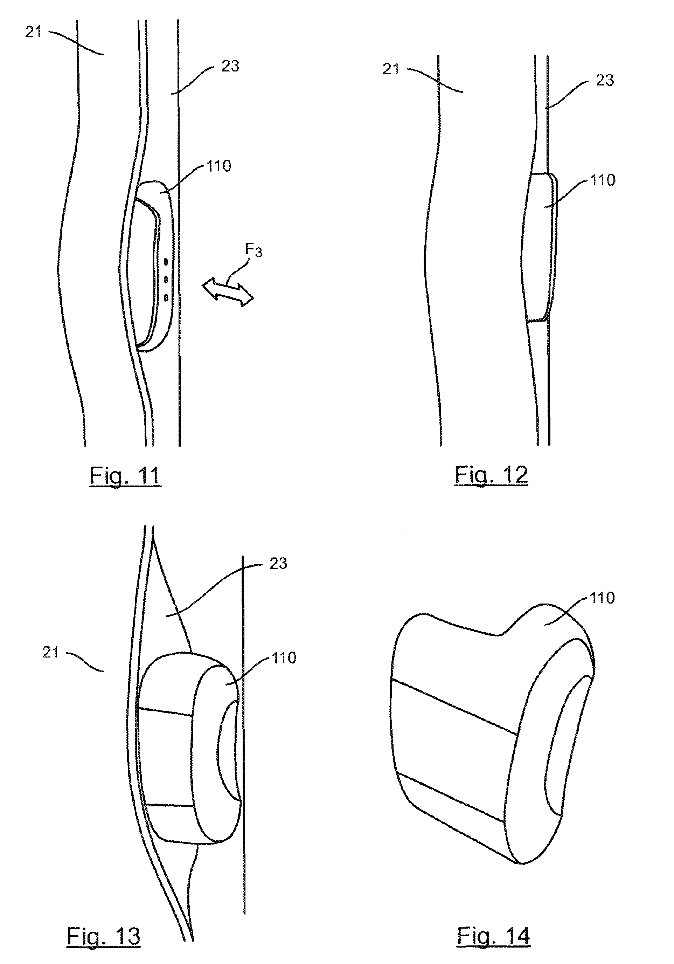

Sur les figures 11 à 14, on a représenté des exemples de poignées d'actionnement 110 qui s'étendent à partir de l'un des bords latéraux d'une portion du cadre 17. Toutes ces poignées d'actionnement 110 sont formées d'une seule pièce, présentant différentes formes, comme illustré. Elles peuvent être actionnées selon la double flèche F3, sensiblement parallèlement à la direction de déplacement de la partie mobile 16.

En particulier, la poignée d'actionnement 110 illustrée sur la figure 11 peut consister en un poussoir comprenant un système de renvoi par exemple par leviers, non représentés sur le dessin dans un souci de clarté, permettant de verrouiller ou de déverrouiller les pênes, lorsque la poignée est actionnée.

La surface principale 21 peut être légèrement bombée comme visible sur les figures 11 et 12.

Bien entendu, l'invention n'est pas limitée aux exemples qui viennent d'être décrits.

En particulier, le dispositif de verrouillage / déverrouillage peut comprendre un seul crochet et un seul pêne.

La poignée d'actionnement peut être constituée d'un crochet, de deux crochets ou encore être d'une seule pièce, reliée et agissant sur deux pênes, l'un coopérant avec le rail supérieur, l'autre coopérant avec le rail inférieur.

Le dispositif d'obturation selon l'invention peut équiper une portière de véhicule, un panneau latéral de carrosserie, une porte ou un panneau arrière, un pavillon, etc.

Le véhicule peut notamment être un véhicule de tourisme, un véhicule utilitaire, un autocar ou autre type de véhicule. Un tel véhicule peut comprendre un ou plusieurs dispositifs d'obturation.

Dans toute la description, les expressions «comprenant un », « comportant un » doivent être comprises comme étant synonymes des expressions « comprenant au moins un », « comportant au moins un », sauf si le contraire est spécifié.

## Revendications

1. Dispositif d'obturation (1) d'une baie formée dans un élément de carrosserie d'un véhicule automobile, comprenant :
- une partie fixe (11), notamment vitrée, apte à être solidarisée à la baie, présentant une ouverture et supportant, sur une face orientée vers l'intérieur du véhicule, au moins un rail (15);15₂) ;
- une partie mobile (16) en coulissement le long dudit rail (15, ;15₂) entre au moins une position d'obturation et une position de dégagement de ladite ouverture, la partie mobile (16) comportant :
* une portion vitrée (20),
* un dispositif de verrouillage / déverrouillage d'au moins un pêne destiné à coopérer avec au moins une gâche associée au rail (151 ; 152), le dispositif de verrouillage/déverrouillage comprenant au moins une poignée d'actionnement (110) apte à agir sur ledit au moins un pêne (191 ;192),
* au moins une portion de cadre (17) entourant au moins partiellement la portion vitrée (20) sur la face de la partie mobile (16) orientée vers l'intérieur du véhicule, la portion de cadre (17) présentant une surface principale (21) sensiblement parallèle au plan défini par la portion vitrée (20) et deux bords latéraux (22 ,23) dont l'un au moins relie la portion de cadre (17) à la portion vitrée (20), la portion de cadre (17) étant agencée pour supporter le dispositif de verrouillage/ déverrouillage,
dispositif **caractérisé en ce que** la poignée d'actionnement (110) s'étend au moins à partir de l'un desdits bords latéraux (22, 23) de la portion de cadre (17).

2. Dispositif selon la revendication précédente, dans lequel la poignée d'actionnement (1 10) s'étend essentiellement, voire exclusivement, à partir dudit bord latéral (23) de la portion de cadre (17).

3. Dispositif selon l'une des revendications précédentes, dans lequel la poignée d'actionnement (110) s'étend sensiblement parallèlement au plan défini par ladite portion vitrée (20).

4. Dispositif selon l'une quelconque des revendications précédentes, dans lequel la poignée d'actionnement traverse une lumière formée dans ledit bord latéral (22, 23) de la portion de cadre (17).

5. Dispositif selon l'une quelconque des revendications précédentes, dans lequel la poignée d'actionnement (110) est mobile selon un axe s'étendant sensiblement parallèlement à l'axe de déplacement du ou desdits pênes (19₁, 19₂).

6. Dispositif selon la revendication précédente, dans lequel la poignée d'actionnement (110) comporte au moins un crochet (25 ; 26) relié à un pêne (19₁ ; 19₂).

7. Dispositif selon la revendication précédente, dans lequel la poignée d'actionnement (110) comporte deux crochets (25, 26) orientés de façon opposée et reliés chacun à un pêne (19, ;19₂).

8. Dispositif selon la revendication précédente, dans lequel la poignée d'actionnement (110) est configurée de telle sorte que le rapprochement des crochets (25, 26) provoque le passage des pênes (19₁ ;19₂), d'une position verrouillée vers une position déverrouillée.

9. Dispositif selon l'une quelconque des revendications précédentes, **caractérisé en ce que** le dispositif de verrouillage / déverrouillage comprend des moyens de liaison (31) du ou des pênes (19₁ ;19₂) à la poignée d'actionnement (110), appartenant au groupe comprenant les câbles et les tringles.

10. Dispositif selon l'une quelconque des revendications précédentes, **caractérisé en ce que** le dispositif de verrouillage / déverrouillage comporte des moyens de rappel (32) configurés pour agir sur la poignée d'actionnement (110) et/ou les moyens de liaison (31) et/ou le ou les pênes (19₁ ;19₂), de manière à les remettre dans une position de verrouillage.

11. Dispositif selon l'une quelconque des revendications précédentes, **caractérisé en ce qu'**au moins un pêne (19, ;19₂) présente une portion (50) de section hexagonale.

12. Dispositif selon l'une quelconque des revendications précédentes, le dispositif présentant au moins une butée (40) intégrée à la poignée d'actionnement (110), la butée étant agencée pour limiter la course de la poignée lorsque les moyens de rappel agissent sur le pêne.

13. Véhicule automobile comprenant au moins un dispositif d'obturation (1) d'une baie d'un véhicule automobile selon l'une quelconque des revendications précédentes.

## Claims

1. Device (1) for closing a bay formed in a body element of a motor vehicle, said device comprising:
- a fixed, especially a glazed, part (11) which is capable of being fastened to the bay, has an opening and supports, on a face which is oriented towards the interior of the vehicle, at least one rail (15₁; 15₂);
- a part (16) which is movable in a sliding manner along the said rail (15₁; 15₂) between at least one position for closing, and one position for unblocking, the said opening, the movable part (16) comprising:
• a glazed portion (20);
• a device for locking/unlocking at least one bolt which is intended to cooperate with at least one catch associated with the rail (15₁; 15₂), the locking/unlocking device comprising at least one operating handle (110) which is capable of acting on the at least one bolt (191; 192);
• at least one frame portion (17) which at least partially surrounds the glazed portion (20) on the face of the movable part (16) which is oriented towards the interior of the vehicle, said frame portion (17) having a main surface (21) which is substantially parallel to the plane defined by the glazed portion (20) and two lateral edges (22, 23), at least one of which connects the frame portion (17) to the glazed portion (20), said frame portion (17) being arranged so as to support the locking/unlocking device;
said device being **characterised in that** the operating handle (110) extends at least from one of the said lateral edges (22, 23) of the frame portion (17).

2. Device according to the preceding claim, wherein the operating handle (110) extends essentially, or even exclusively, from the said lateral edge (23) of the frame portion (17).

3. Device according to one of the preceding claims, wherein the operating handle (110) extends substantially parallel to the plane defined by the said glazed portion (20).

4. Device according to any of the preceding claims, wherein the operating handle passes through an aperture formed in the said lateral edge (22, 23) of the frame portion (17).

5. Device according to any of the preceding claims, wherein the operating handle (110) is movable along an axis extending substantially parallel to the axis of displacement of the said bolt or bolts (19₁, 19₂).

6. Device according to the preceding claim, wherein the operating handle (110) comprises at least one hook (25; 26) which is connected to a bolt (19₁; 19₂) .

7. Device according to the preceding claim, wherein the operating handle (110) comprises two hooks (25, 26) which are oriented in an opposed manner and are each connected to a bolt (19₁; 19₂).

8. Device according to the preceding claim, wherein the operating handle (110) is configured in such a way that the bringing-together of the hooks (25, 26) brings about the transition of the bolts (19₁; 19₂) from a locked position to an unlocked position.

9. Device according to any of the preceding claims, **characterised in that** the locking/unlocking device comprises means (31) for linking the bolt or bolts (19₁; 19₂) to the operating handle (110), which means belong to the group comprising cables and rods.

10. Device according to any of the preceding claims, **characterised in that** the locking/unlocking device comprises return means (32) which are configured so as to act on the operating handle (110) and/or the linking means (31) and/or the bolt or bolts (19₁; 19₂) in such a way as to restore them to a locking position.

11. Device according to any of the preceding claims, **characterised in that** at least one bolt (19₁; 19₂) has a portion (50) of hexagonal section.

12. Device according to any of the preceding claims, said device having at least one stop (40) which is integrated into the operating handle (110), said stop being arranged so as to limit the travel of the handle when the return means act on the bolt.

13. Motor vehicle comprising at least one device (1) for closing a bay in a motor vehicle according to any of the preceding claims.

## Patentansprüche

1. Verschlussvorrichtung (1) einer Öffnung, die in einem Karosserieelement eines Kraftfahrzeugs ausgebildet ist, mit:
- einem stationären Teil (11), der insbesondere verglast ist, der fest mit der Öffnung verbunden werden kann, der eine Öffnung aufweist und auf einer zum Inneren des Fahrzeugs gerichteten Seite mindestens eine Schiene (15₁; 15₂) trägt;
- einen Teil (16), der unter Gleiten entlang der Schiene (15₁; 15₂) zwischen mindestens einer Verschlussposition und einer Freigabeposition der Öffnung beweglich ist, wobei der bewegliche Teil (16) aufweist:
* einen verglasten Teil (20),
* eine Verriegelungs-/Entriegelungsvorrichtung wenigstens einer Raste, die dazu bestimmt ist, mit mindestens einem der Schiene (151; 152) zugeordneten Riegel zusammenzuwirken, wobei die Verriegelungs-/Entriegelungsvorrichtung mindestens einen Betätigungsgriff (110) aufweist, der auf die mindestens eine Raste (191; 192) einwirken kann,
* mindestens einen Rahmenabschnitt (17), der mindestens teilweise den verglasten Abschnitt (20) auf der Seite des beweglichen zum Inneren des Fahrzeugs gerichteten Teils (16) umgibt, wobei der Rahmenabschnitt (17) eine Hauptfläche (21) aufweist, die im Wesentlichen zu der von dem verglasten Abschnitt (20) und zwei Seitenrändern (22, 23) definierten Ebene parallel ist, von welchen mindestens einer den Rahmenabschnitt (17) mit dem verglasten Abschnitt (20) verbindet, wobei der Rahmenabschnitt (17) dazu eingerichtet ist, die Verriegelungs-/Entriegelungsvorrichtung zu tragen,
Vorrichtung **dadurch gekennzeichnet, dass** sich der Betätigungsgriff (110) mindestens von einem der seitlichen Ränder (22, 23) des Rahmenabschnitts (17) ausgehend erstreckt.

2. Vorrichtung nach dem vorhergehenden Anspruch, bei der sich der Betätigungsgriff (110) im Wesentlichen sogar ausschließlich von dem seitlichen Rand (23) ausgehend des Rahmenabschnitts (17) erstreckt.

3. Vorrichtung nach einem der vorhergehenden Ansprüche, bei der sich der Betätigungsgriff (110) im Wesentlichen parallel zu der von dem verglasten Abschnitt (20) definierten Ebene erstreckt.

4. Vorrichtung nach einem der vorhergehenden Ansprüche, bei der der Betätigungsgriff eine Öffnung durchquert, die in dem seitlichen Rand (22, 23) des Rahmenabschnitts (17) ausgebildet ist.

5. Vorrichtung nach einem der vorhergehenden Ansprüche, bei der der Betätigungsgriff (110) entlang einer Achse beweglich ist, die sich im Wesentlichen parallel zu der Verschiebungsachse der Raste(n) (19₁, 19₂) erstreckt.

6. Vorrichtung nach dem vorhergehenden Anspruch, bei der der Betätigungsgriff (110) mindestens einen Haken (25; 26) aufweist, der mit einer Raste (19₁; 19₂) verbunden ist.

7. Vorrichtung nach dem vorhergehenden Anspruch, bei der der Betätigungsgriff (110) zwei Haken (25, 26) aufweist, die entgegengesetzt ausgerichtet und jeweils mit einer Raste (19₁; 19₂) verbunden sind.

8. Vorrichtung nach dem vorhergehenden Anspruch, bei der der Betätigungsgriff (110) derart konfiguriert ist, dass die Annäherung der Haken (25, 26) das Übergehen der Rasten (19₁; 19₂) von einer verriegelten Position zu einer entriegelten Position bewirkt.

9. Vorrichtung nach einem der vorhergehenden Ansprüche, **dadurch gekennzeichnet, dass** die Verriegelungs-/Entriegelungsvorrichtung Mittel (31) zum Verbinden der Raste oder Rasten (19₁; 19₂) mit dem Betätigungsgriff (110) aufweist, die zu der Gruppe aufweisend Kabel und Zugstangen gehören.

10. Vorrichtung nach einem der vorhergehenden Ansprüche, **dadurch gekennzeichnet, dass** die Verriegelungs-/Entriegelungsvorrichtung Rückholelemente (32) aufweist, die dazu konfiguriert sind, auf den Betätigungsgriff (110) und/oder die Verbindungsmittel (31) und/oder die Raste oder Rasten (19₁; 19₂) derart einzuwirken, dass sie in eine Verriegelungsposition zurückgestellt werden.

11. Vorrichtung nach einem der vorhergehenden Ansprüche, **dadurch gekennzeichnet, dass** mindestens eine Raste (19₁; 19₂) einen Abschnitt (50) mit sechseckigem Querschnitt aufweist.

12. Vorrichtung nach einem der vorhergehenden Ansprüche, wobei die Vorrichtung mindestens einen Anschlag (40) aufweist, der in den Betätigungsgriff (110) integriert ist, wobei der Anschlag dazu eingerichtet ist, den Hub des Griffs einzuschränken, wenn die Rückholelemente auf die Raste einwirken.

13. Kraftfahrzeug, das mindestens eine Verschlussvorrichtung (1) einer Öffnung eines Kraftfahrzeugs nach einem der vorhergehenden Ansprüche aufweist.
